# EUROPÄISCHE PATENTSCHRIFT

(11) **EP 1 353 109 B1**
(45) Veröffentlichungstag und Bekanntmachung des Hinweises auf die Patenterteilung: **18.08.2010**
(21) Anmeldenummer: 03007898.4
(22) Anmeldetag: 07.04.2003
(51) Int. Cl.: F16L 37/32

(54) **Kupplungsteil einer Druckmittel-Steckkupplung**
A coupling piece for a coupling for fluid under pressure
Pièce d'accouplement pour un accouplement pour fluide sous pression

(30) Priorität: 08.04.2002 DE 20205441 U
(43) Veröffentlichungstag der Anmeldung: 15.10.2003
(73) Patentinhaber: Voswinkel KG, 58540 Meinerzhagen (DE)
(72) Erfinder: Hartmann, Jürgen, Dipl.-Ing., 58339 Breckerfeld (DE); Firus, Artur, Dipl.-Ing., 58638 Iserlohn (DE)
(74) Vertreter: Patentanwälte Dr. Solf & Zapf

(56) Entgegenhaltungen:
- DE-A- 3 728 577
- US-A- 5 918 633

## Beschreibung

Die vorliegende Erfindung betrifft ein Kupplungsteil einer aus zwei zusammensteckbaren und sich dabei gegenseitig öffnende Hauptventile aufweisenden Kupplungsteilen bestehenden Druckmittel-Steckkupplung, insbesondere eine Kupplungsmuffe zur Steckaufnahme eines Kupplungssteckers, gemäß dem Oberbegriff des unabhängigen Patentanspruchs 1.

Solche Steckkupplungen dienen insbesondere als Schnellkupplungen für Hydraulikleitungen von hydraulischen Druckaggregaten. Dabei sind üblicherweise Verriegelungsmittel zum lösbaren Verriegeln der Kupplungsteile in der eingesteckten Kupplungslage vorgesehen. In den meisten Fällen handelt es sich um eine Kugelrastung, wobei im Bereich einer Aufnahmeöffnung der Kupplungsmuffe über den Umfang verteilte Kugeln angeordnet sind, die im eingesteckten Zustand des Kupplungssteckers bereichsweise radial in eine Steckerringnut eingreifen. Die Kugeln sitzen radial beweglich in Öffnungen eines inneren Grundkörpers der Kupplungsmuffe, die in diesem Bereich eine äußere Hülse aufweist, die in einer ersten Relativstellung die Kugeln von außen gegen eine radiale Lösebewegung arretiert und in einer zweiten, axial gegen Federkraft verschobenen Relativstellung die Kugeln für eine Lösebewegung freigibt. Bei solchen Steckkupplungen besteht oft vor einem Einkuppeln oder vor einem Auskuppeln noch ein innerer Restdruck des Druckmediums, der mit beispielsweise bis zu 200 bar so hoch sein kann, dass das Ein- und Auskuppeln nicht ohne Weiteres möglich ist. Beim Einkuppeln liegt dies daran, dass das Hauptventil nicht gegen den vorhandenen Restdruck geöffnet werden kann. Beim Auskuppeln wirkt der Restdruck so auf die Verriegelungsmittel, dass diese durch hohen Kraftschluß praktisch gegen ein Entriegeln gesperrt sind, also nicht manuell gelöst werden können.

Aus den genannten Gründen ist es bekannt, in mindestens eines der Kupplungsteile, insbesondere in die Kupplungsmuffe, ein Druckentlastungsventil zu integrieren. Dadurch wird beim Einkuppeln zunächst bei noch geschlossenem (da druckbedingt nicht zu öffnenden) Hauptventil das Druckentlastungsventil kurz geöffnet, bis sich der Restdruck durch Abfließen eines Teils des Druckmittels soweit abgebaut hat, bis das zum Einkuppeln notwendige Öffnen des Hauptventils möglich ist und so das Einkuppeln bis zur Verriegelung erfolgen kann. Beim Auskuppeln wird bei zunächst noch druckbedingt weiter verriegelten Kupplungsteilen das Druckentlastungsventil ebenfalls kurz geöffnet, bis die Verriegelungsmittel gelöst und dann die Kupplungsteile getrennt werden können. Das dabei jeweils zur Druckabsenkung abfließende Druckmittel sollte zu einem Auffangbehälter (Tank) geleitet werden.

Ein Kupplungsteil gemäß dem Oberbegriff des Anspruchs 1 ist aus dem Dokument US-A-5 918 633 bekannt, wobei dieses Kupplungsteil als Kupplungsmuffe zur Steckaufnahme eines Kupplungssteckers ausgebildet ist. Die Kupplungsmuffe weist in einer ersten Ausführung ein Druckentlastungsventil und in einer zweiten Ausführung zwei diametral gegenüberliegend angeordnete Druckentlastungsventile auf. Das bzw. jedes Druckentlastungsventil sitzt radial beweglich in einem inneren Grundkörper, der beim Ein- und Auskuppeln des Kupplungssteckers axial beweglich ist. Dabei wirkt das/jedes Druckentlastungsventil mit einem hülsenförmigen, den Grundkörper koaxial umschließenden Steuerelement so zusammen, dass es durch eine Verschiebung des Grundkörpers radial nach innen zur Mittelachse des Kupplungsteils hin in eine Öffnungsstellung bewegt wird. Dadurch ist eine Druckentlastung in beiden Richtungen, sowohl beim Einkuppeln als auch beim Auskuppeln möglich, indem der innere Grundkörper in die eine oder andere Richtung axial verschoben wird. Aus der beschriebenen Ausgestaltung des bekannten Kupplungsteils resultiert aber der Nachteil einer schwierigen Montage, weil die Druckentlastungsventile von innen her in Ventilsitze des Grundkörpers eingesetzt werden müssen. Zudem weisen die Ventile Weichdichtungen in Form von elastischen O-Ringen auf, die durch die im Öffnungsmoment auftretende, druckbedingt zum Teil sehr schnelle Druckentlastungsströmung beschädigt oder sogar zerstört werden können. Schließlich führt die besondere Anordnung der Druckentlastungsventile dazu, dass ein Druckanschluss nicht gleichachsig, d. h. axial der Stecker-Einsteckseite gegenüberliegend, sondern seitlich, in radialer Richtung nach außen führend angeordnet ist, während der Steckerseite axial gegenüberliegend eine Druckentlastungsöffnung (vent port) vorgesehen ist.

Bei einer anderen bekannten Ausführung eines Kupplungsteils ist das Druckentlastungsventil nach Art eines axialen Schieberventils ausgeführt, wobei durch axiale Steuerbewegungen des inneren Grundkörpers ein Ventilschieber axial relativ zu mindestens einer radialen Strömungsöffnung bewegt wird. Dadurch ist zwar eine Druckentlastung in beiden Richtungen, das heißt sowohl beim Einkuppeln als auch beim Auskuppeln, möglich. Allerdings müssen dabei unter dem zum Teil sehr hohen Restdruck Weichdichtungen überfahren werden, die durch druckbedingt hohe Strömungsgeschwindigkeiten des abfließenden Druckmittels einem sehr hohen Verschleiß durch sogenannte Erosionserscheinungen ausgesetzt sind. Dies führt zu einer hohen Störungsanfälligkeit bzw. einer nur kurzen Haltbarkeit, so dass das bekannte Kupplungsteil sehr wartungsintensiv ist.

Es ist ferner eine nicht gattungsgemäße Ausführung eines Kupplungsteils bekannt, bei dem als Druckentlastungsventil ein metallisch dichtendes Sitzventil vorgesehen ist. Da dieses aber mit axialer Schließ- und Öffnungsrichtung direkt durch axiale Steuerbewegungen betätigt wird, ist diese Ausführung ausschließlich zur Druckentlastung beim Einkuppeln geeignet; ein Auskuppeln unter Restdruck ist wegen dazu fehlender bzw. nicht möglicher Druckentlastung nicht möglich oder aber nur durch ein zusätzliches Entlastungsventil, welches - analog zu der oben beschriebenen Ausführung - wiederum radiale Strömungsöffnungen mit Weichdichtungen aufweist, die einem hohen Verschleiß ausgesetzt sind.

Der vorliegenden Erfindung liegt die Aufgabe zugrunde, ein Kupplungsteil der genannten Art zu schaffen, welches mit geringen Kuppelkräften sowohl ein Einkuppeln als auch ein Auskuppeln jeweils trotz eines hohen Rest-Betriebsdruckes von insbesondere bis mindestens 250 bar bei geringem Verschleiß und langer Haltbarkeit auch über zahlreiche Kuppelvorgänge hinweg ermöglicht, wobei zudem günstige Strömungseigenschaften im Betrieb und bei Druckentlastung gewährleistet sein sollen.

Erfindungsgemäß wird dies durch die Merkmale des unabhängigen Patentanspruchs 1 erreicht. Vorteilhafte Ausgestaltungen der Erfindung sind in den abhängigen Ansprüchen und der anschließenden Beschreibung enthalten.

Demnach ist das bzw. jedes Druckentlastungsventil als metallisch dichtendes Sitzventil mit einem metallischen Ventilelement und einem metallischen Ventilsitz ausgebildet, wobei das Steuerelement mit einer Steuerfläche radial über ein Zwischenelement gegen das Ventilelement wirkt, wobei das Ventilelement in einer Schließstellung radial nach innen gegen den Ventilsitz wirkt und radial nach außen in eine Öffnungsstellung bewegbar ist Das Druckentlastungsventil kann beliebig durch eine Steuerbewegung in beiden axialen Richtungen öffnen. Durch Verwendung eines metallischen Sitzventils zur Druckentlastung sowohl beim Einkuppeln als auch beim Auskuppeln wird eine hohe Haltbarkeit erreicht, da die metallischen Ventilteile gegen strömungsbedingte Erosionserscheinungen sehr resistent sind.

Anhand eines in der Zeichnung veranschaulichten, bevorzugten Ausführungsbeispiels soll die Erfindung genauer erläutert werden. Dabei zeigen:
- Fig.1: eine halbgeschnittene Seitenansicht einer Steckkupplung mit einer erfindungsgemäßen Kupplungsmuffe und einem eingesteckten und verriegelten Kupplungsstecker mit geöffneten Hauptventilen in einer geschlossenen Neutralstellung der Druckentlastungseinrichtung,
- Fig. 2: eine vergrößerte Darstellung des Bereichs II gemäß Fig. 1 zur Erläuterung des Druckentlastungsventils,
- Fig. 3: eine Darstellung analog zu Fig. 1, jedoch zur Erläuterung des Vorgangs beim Einkuppeln in einer ersten Öffnungsstellung der Druckentlastungseinrichtung,
- Fig. 4: eine zu Fig. 2 analoge Darstellung des Bereichs IV in Fig. 3,
- Fig.5: eine Darstellung analog zu Fig. 1 bzw. 3 zur Erläuterung des Auskuppelvorganges in einer zweiten Öffnungsstellung der Druckentlastungseinrichtung und
- Fig. 6: eine Vergrößerung des Bereichs VI in Fig. 5.

In den verschiedenen Figuren der Zeichnung sind gleiche Teile stets mit den gleichen Bezugszeichen versehen.

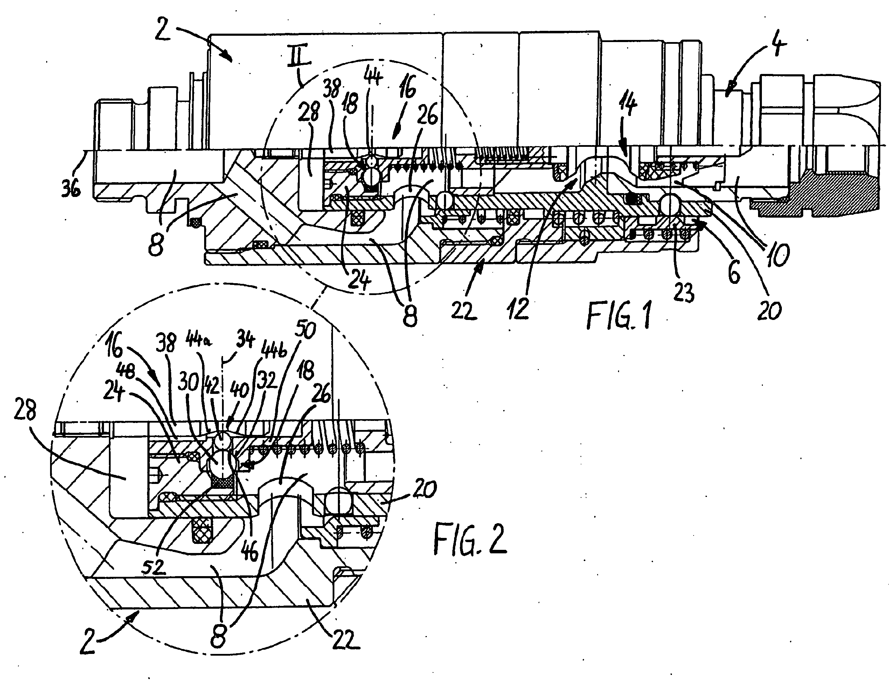

Die in der Zeichnung dargestellte Druckmittel-Steckkupplung, insbesondere Hydraulik-Kupplung, ist als Schnellverschlußkupplung mit an sich bekannter Kugelarretierung ausgebildet und besteht aus zwei Kupplungsteilen, und zwar einer Kupplungsmuffe 2 und einem Kupplungsstecker 4. Der Kupplungsstecker 4 ist bereichsweise in eine Einstecköffnung der Kupplungsmuffe 2 einsteckbar und in der in Fig. 1 dargestellten Kupplungslage durch Verriegelungsmittel 6 lösbar verriegelbar. Im dargestellten Beispiel handelt es sich bei den Verriegelungsmitteln 6 um eine an sich bekannte Sperrkugel-Verriegelung. Die Einzelheiten dieser Verriegelung sind Stand der Technik und bedürfen daher keiner weiteren Erläuterung.

Jedes Kupplungsteil 2, 4 weist einen inneren Haupt-Strömungskanal 8 bzw. 10 auf, der jeweils durch ein Hauptventil 12 bzw. 14 im entkuppelten Zustand selbsttätig verschließbar ist. Die beiden Hauptventile 12, 14 sind einander derart gegenüberliegend angeordnet, dass sie sich beim Steckkuppeln gegenseitig durch stirnseitige Anlage öffnen (vgl. Fig. 1, 3 und 5).

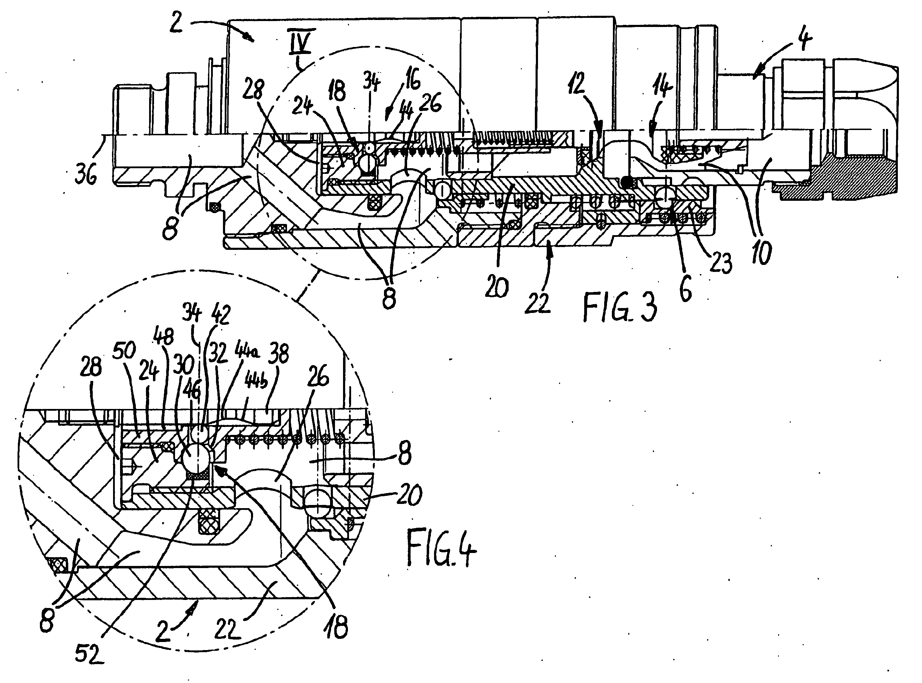

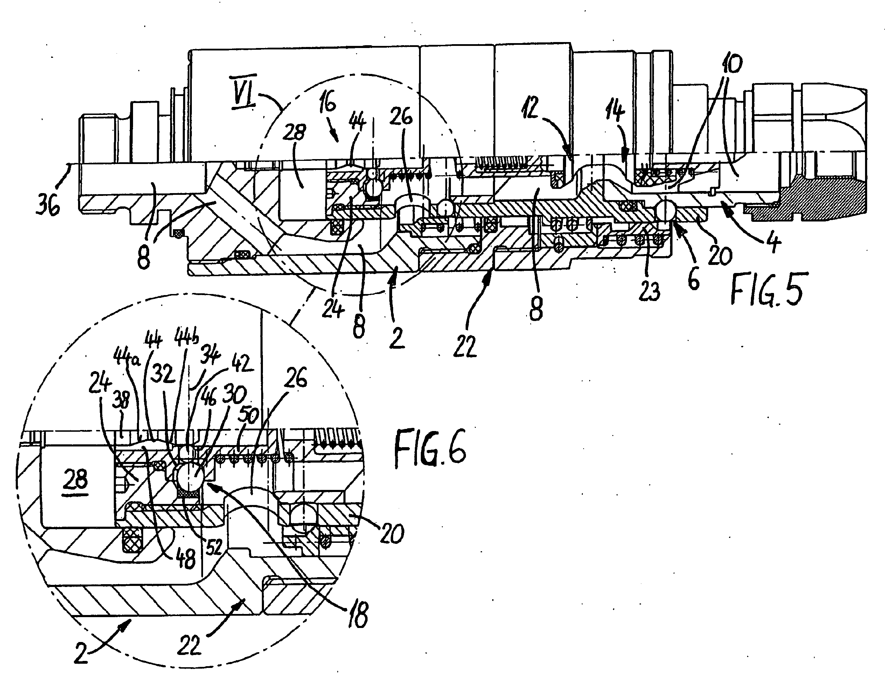

Bei der dargestellten Ausführung weist die Kupplungsmuffe 2 eine Druckentlastungseinrichtung 16 auf, grundsätzlich könnte aber auch - alternativ oder zusätzlich - der Kupplungsstecker 4 mit einer solchen Druckentlastungseinrichtung ausgestattet sein. Die Druckentlastungseinrichtung 16 ermöglicht sowohl ein Einkuppeln als auch ein Auskuppeln unter einem inneren Restdruck des Druckmittels und weist dazu mindestens ein selbsttätig jeweils beim Ein- und Auskuppeln kurzzeitig öffnendes und dadurch Druckmittel zur Druckabsenkung nach außen insbesondere in einen Auffangbehälter (Tank) ablassendes Druckentlastungsventil 18 auf. Die Druckentlastungseinrichtung 16 wirkt mit einem inneren Kupplungs- Grundkörper 20 zusammen, der in einem äußeren Kupplungsgehäuse 22 aus einer mittleren Neutralstellung (Figuren 1 und 2) jeweils gegen Federkraft axial in beiden Richtungen relativ zum Kupplungsgehäuse 22 verschiebbar ist, und zwar beim Einkuppeln in eine Einkuppelstellung (Figuren 3 und 4) bzw. beim Auskuppeln - zeitweise gemeinsam mit einer Riegelhülse 23 der Verriegelungsmittel 6 - in eine Auskuppelstellung (Figuren 5 und 6). Durch diese Verschiebebewegung werden die Verriegelungsmittel 6 zum Arretieren bzw. Lösen betätigt. Die Verschiebebewegungen wirken zudem auch als axiale Steuerbewegungen zum Öffnen auf das Druckentlastungsventil 18, bis sich nach einem entsprechenden Druckabfall der Grundkörper 20 federkraftbedingt selbsttätig wieder in die Neutralstellung bewegt, wodurch das Druckentlastungsventil 18 wieder schließt.

Der Grundkörper 20 ist im Wesentlichen hülsenförmig ausgebildet und umschließt an seinem vorderen Ende die Einstecköffnung für den Kupplungsstecker 4. An seinem anderen Ende weist der Grundkörper 20 ein Verschlußelement 24 auf, vor dem über Queröffnungen 26 der Strömungskanal 8 abzweigt. Das Verschlußelement 24 trennt so den Haupt-Strömungskanal 8 von einem Entlastungsraum 28, der über mindestens einen Entlastungskanal (in den Schnittstellen nicht erkennbar) nach außen insbesondere zu einem Auffangbehälter (Tank) führt. Dabei ist das Druckentlastungsventil 18 in eine Passage zwischen dem Haupt-Strömungskanal 8 und dem Entlastungsraum 28 angeordnet.

Wie sich insbesondere aus den vergrößerten Darstellungen in Fig. 2, 4 und 6 ergibt, ist das Druckentlastungsventil 18 erfindungsgemäß als metallisch dichtendes Sitzventil mit einem metallischen Ventilelement 30 und einem metallischen Ventilsitz 32 ausgebildet. Dabei ist das Ventilelement 30 erfindungsgemäß bezüglich seiner Schließ- und Öffnungsrichtung (Strichpunktlinie 34) quer, insbesondere radial, d. h. senkrecht zu einer Kupplungslängsachse 36 angeordnet. Dazu werden die axialen Steuerbewegungen des Grundkörpers 20 über Übertragungselemente jeweils in eine im Wesentlichen radiale Öffnungsbewegung des Ventilelementes 30 umgesetzt, wobei diese Öffnungsbewegung in beiden axialen Verschieberichtungen des Grundkörpers 20 gleich ist, und zwar wird das Ventilelement 30 jeweils radial nach außen von dem Ventilsitz 32 abgehoben. In der bevorzugten Ausführungsform ist dazu vorgesehen, dass innerhalb des Kupplungsgehäuses 22 ein Steuerelement 38 insbesondere in Form eines axialen, zentrischen Stiftes ortsfest angeordnet ist. Dadurch, dass das Druckentlastungsventil 18 im Bereich des Verschlußelementes 24 des verschiebbaren Grundkörpers 20 angeordnet ist, bewegt es sich gemeinsam mit dem Grundkörper 20 relativ zu dem ortsfesten Steuerelement 38. Dabei weist das Steuerelement 38 eine Steuerfläche 40 auf, die über ein Zwischenelement 42 nockenartig gegen das Ventilelement 30 wirkt. Die Steuerfläche 40 ist bevorzugt durch eine ringnutartige Vertiefung 44 auf dem Außenumfang des stiftförmigen Steuerelementes 38 gebildet, wobei die Vertiefung 44 zwei entgegengesetzt schräge, insbesondere flach konische Flankenflächen 44a, 44b aufweist. In der Neutralstellung gemäß Fig. 1 und 2 sitzt das Zwischenelement 42 so im Bereich der Vertiefung 44, dass das Ventilelement 30 dichtend in dem Ventilsitz 32 liegt und damit das Druckentlastungsventil 18 geschlossen ist. Durch die axiale Relativ-Steuerbewegung wird das Zwischenelement 42 über jeweils eine der beiden Flankenflächen 44a oder 44b radial nach außen gegen das Ventilelement 30 bewegt, was zum Öffnung des Druckentlastungsventils 18 durch Abheben des Ventilelementes 30 vom Ventilsitz 32 führt.

In der dargestellten, bevorzugten Ausführungsform sind sowohl das Ventilelement 30 als auch das Zwischenelement 42 jeweils durch eine Kugel gebildet. Dies ist besonders wirtschaftlich, weil es sich bei den Kugeln um Normteile (insbesondere Lagerkugeln) handeln kann. Die das Zwischenelement 42 bildende Kugel ist mit einem gegenüber der das Ventilelement 30 bildenden Kugel kleineren Durchmesser sowie mit einem für einen Druckmitteldurchlaß ausreichenden Spiel in einem radialen, sich an den Ventilsitz 32 anschließenden Ventilkanal 46 angeordnet. Dieser Ventilkanal 46 mündet in einen axialen, zu dem Entlastungsraum 28 führenden Abflußkanal 48. Dabei erstreckt sich das Steuerelement 38 mit einem für den Druckmitteldurchlaß ausreichenden Spiel in bzw. durch den Abflußkanal 48.

Zweckmäßigerweise ist das Ventilelement 30 in Schließrichtung mit einer federelastischen Vorspannkraft beaufschlagt. Dabei sitzt das Ventilelement 30 in einer radialen Bohrung eines buchsenartigen, in dem Verschlußelement 24 angeordneten Trägerelementes 50. Das Trägerelement 50 ist im Bereich der Bohrung derart von einem Ring 52 aus gummielastischem Material umschlossen, dass der Ring 52 das Ventilelement 30 mit der radial nach innen gerichteten Vorspannkraft beaufschlagt. Alternativ sind aber auch andere Arten von Federelementen zur Erzeugung der Vorspannkraft möglich.

In weiterer Ausgestaltung der Erfindung kann es vorteilhaft sein, wenn die Druckentlastungseinrichtung 16 mindestens zwei gleichartige, mit dem selben Steuerelement 38 zusammenwirkende Druckentlastungsventile 18 aufweist, die dann insbesondere auf diametral gegenüberliegenden Seiten angeordnet sind. Daher ist in den Halbschnittdarstellung jeweils nur eines der Druckentlastungsventile 18 erkennbar. Ein weiteres Druckentlastungsventil wäre gleichartig und zur Kupplungslängsachse 36 symmetrisch ausgebildet.

## Patentansprüche

1. Kupplungsteil (2 oder 4) einer aus zwei zusammensteckbaren und sich dabei gegenseitig öffnende Hauptventile (12, 14) aufweisenden Kupplungsteilen (2, 4) bestehenden Druckmittel-Steckkupplung, insbesondere Kupplungsmuffe (2) zur Steckaufnahme eines Kupplungssteckers (4), wobei das Kupplungsteil (2 oder 4) eine Druckentlastungseinrichtung (16) aufweist, die sowohl ein Einkuppeln als auch ein Auskuppeln unter innerem Druck des Druckmittels ermöglicht und dazu mindestens ein selbsttätig jeweils beim Ein- und Auskuppeln kurzzeitig öffnendes und dadurch Druckmittel zur Druckabsenkung nach außen ablassendes Druckentlastungsventil (18) aufweist, wobei das Druckentlastungsventil (18) ein Ventilelement (30) aufweist, das bezüglich seiner Schließ- und Öffnungsrichtung (34) quer zu einer Kupplungslängsachse (36) angeordnet ist, wobei das Druckentlastungsventil (18) gemeinsam mit einem inneren Kupplungs-Grundkörper (20) relativ zu einem innerhalb eines äußeren Kupplungsgehäuses (22) ortsfest angeordneten Steuerelement (38) axial beweglich ist, wobei diese axiale Grundkörper-Steuerbewegung in eine im Wesentlichen radiale Öffnungsbewegung des Ventilelementes (30) umgesetzt wird,
**dadurch gekennzeichnet, dass** das Druckentlastungsventil (18) als metallisch dichtendes Sitzventil mit dem metallischen Ventilelement (30) und einem metallischen Ventilsitz (32) ausgebildet ist, wobei das Steuerelement (38) mit einer Steuerfläche (40) radial über ein Zwischenelement (42) gegen das Ventilelement (30) wirkt, und wobei das Ventilelement (30) in einer Schließstellung radial nach innen gegen den Ventilsitz (32) wirkt und radial nach außen in eine Öffnungsstellung bewegbar ist.

2. Kupplungsteil nach Anspruch 1,
**dadurch gekennzeichnet, dass** der innere Kupplungs-Grundkörper (20) in dem äußeren Kupplungsgehäuse (22) derart aus einer mittleren Neutralstellung (Fig. 12) jeweils gegen Federkraft axial in beiden Richtungen relativ zum Kupplungsgehäuse (22) bewegbar ist, und zwar beim Einkuppeln in eine Einkuppelstellung (Fig. 3,4) bzw. beim Auskuppeln in eine Auskuppelstellung (Fig. 5,6), dass jeweils durch diese axiale Steuerbewegung das Druckentlastungsventil (18) zum Öffnen betätigt wird.

3. Kupplungsteil nach Anspruch 1 oder 2,
**dadurch gekennzeichnet, dass** das Steuerelement (38) durch einen axialen, insbesondere zentrischen Stift gebildet ist, der als Steuerfläche (40) auf seinem Außenumfang eine ringnutartige Vertiefung (44) mit zwei entgegengesetzt schrägen, insbesondere flach konischen Flankenflächen (44a, 44b) aufweist.

4. Kupplungsteil nach einem der Ansprüche 1 bis 3,
**dadurch gekennzeichnet, dass** das Ventilelement (30) durch eine Kugel gebildet ist.

5. Kupplungsteil nach einem der Ansprüche 1 bis 4,
**dadurch gekennzeichnet, dass** dasZwischenelement(42) durch eine Kugel gebildet ist.

6. Kupplungsteil nach Anspruch 4 und 5,
**dadurch gekennzeichnet, dass** die das Zwischenelement (42) bildende Kugel mit einem gegenüber der das Ventilelement (30) bildenden Kugel kleineren Durchmesser und mit einem für einen Druckmitteldurchlass ausreichenden Spiel in einem radialen, sich an den Ventilsitz (32) anschließenden Ventilkanal (46) angeordnet ist, der in einen axialen Abflusskanal (48) mündet, wobei sich das Steuerelement (38) mit einem für den Druckmitteldurchlass ausreichenden Spiel in den Abflusskanal (48) erstreckt.

7. Kupplungsteil nach einem der Ansprüche 1 bis 6,
**dadurch gekennzeichnet, dass** dasVentilelement(30)in Schließrichtung mit einer federelastischen Vorspannkraft beaufschlagt ist.

8. Kupplungsteil nach Anspruch 7.
**dadurch gekennzeichnet, dass** das Ventilelement (30) in einer radialen Bohrung eines Trägerelementes (50) sitzt, wobei das Trägerelement (50) im Bereich der Bohrung von einem Ring (52) aus gummielastischem Material so umschlossen ist, dass der Ring (52) das Ventilelement (30) mit der Vorspannkraft beaufschlagt.

9. Kupplungsteil nach einem der Ansprüche 1 bis 8,
**dadurch gekennzeichnet, dass** die Druckentlastungseinrichtung (16) mindestens zwei gleichartige, mit dem gleichen Steuerelement (38) zusammenwirkende Druckentlastungsventile (18) aufweist.

## Claims

1. Coupling part (2 or 4) of a pressurizing-medium plug-in coupling comprising two coupling parts (2, 4) which can be plugged together and have main valves (12, 14) mutually opening thereupon, in particular a coupling sleeve (2) for the plug-in reception of a coupling plug (4), the coupling part (2 or 4) having a pressure relief device (16) which enables both a coupling and an uncoupling under internal pressure of the pressurizing medium and for this purpose has at least one pressure relief valve (18) which automatically opens for a short time in each case upon coupling and uncoupling and thereby discharges pressurizing medium to the outside to reduce the pressure, the pressure relief valve (18) having a valve element (30) which is arranged, in relation to its closing and opening direction (34), transversely with respect to a coupling longitudinal axis (36), the pressure relief valve (18) being axially movable jointly with an inner coupling base body (20) relative to a control element (38) arranged fixedly within an outer coupling housing (22), this axial base body control movement being converted into a substantially radial opening movement of the valve element (30),
**characterised in that** the pressure relief valve (18) is formed as a metallic sealing seat valve with the metallic valve element (30) and a metallic valve seat (32), the control element (38) acting with a control surface (40) radially against the valve element (30) via an intermediate element (42), and the valve element (30) in a closed position acting radially inwards against the valve seat (32) and being movable radially outwards into an open position.

2. Coupling part according to Claim 1,
**characterised in that** the inner coupling base body (20) is movable in the outer coupling housing (22) from a central neutral position (Fig. 1, 2), in each case against spring force axially in both directions relative to the coupling housing (22), to be precise upon coupling into a coupling position (Fig. 3, 4) and upon uncoupling into an uncoupling position (Fig. 5, 6), in such a manner that the pressure relief valve (18) is in each case actuated to open by this axial control movement.

3. Coupling part according to Claim 1 or 2,
**characterised in that** the control element (38) is formed by an axial, in particular central, pin which has as the control surface (40) on its outer circumference an annular groove-like indentation (44) with two oppositely sloping, in particular shallow-conical, flank surfaces (44a, 44b).

4. Coupling part according to one of Claims 1 to 3,
**characterised in that** the valve element (30) is formed by a sphere.

5. Coupling part according to one of Claims 1 to 4,
**characterised in that** the intermediate element (42) is formed by a sphere.

6. Coupling part according to Claim 4 and 5,
**characterised in that** the sphere forming the intermediate element (42) is arranged, with a smaller diameter compared with the sphere forming the valve element (30) and with a sufficient clearance for a passage of pressurizing medium, in a radial valve channel (46) adjoining the valve seat (32) and opening into an axial outflow channel (48), the control element (38) extending, with a sufficient clearance for the passage of pressurizing medium, into the outflow channel (48).

7. Coupling part according to one of Claims 1 to 6,
**characterised in that** the valve element (30) is loaded with a spring-elastic prestressing force in the closing direction.

8. Coupling part according to Claim 7,
**characterised in that** the valve element (30) is seated in a radial bore of a carrier element (50), the carrier element (50) being enclosed in the region of the bore by a ring (52) made of rubber-elastic material, such that the ring (52) loads the valve element (30) with the prestressing force.

9. Coupling part according to one of Claims 1 to 8,
**characterised in that** the pressure relief device (16) has at least two pressure relief valves (18) of the same kind, cooperating with the same control element (38).

## Revendications

1. Pièce d'accouplement (2 ou 4) d'un accouplement à emboîtement pour fluide sous pression, composé de deux pièces d'accouplement (2, 4) à emboîter et présentant des soupapes principales (12, 14) qui s'ouvrent alors l'une par rapport à l'autre, en particulier un manchon d'accouplement (2) pour recevoir par emboîtement une fiche d'accouplement (4), dans laquelle la pièce d'accouplement (2 ou 4) présente un dispositif de décharge de pression (16) permettant aussi bien un accouplement qu'un désaccouplement sous pression interne du fluide sous pression et présente à cet effet au moins une soupape de décharge de pression (18) s'ouvrant automatiquement brièvement respectivement lors de l'accouplement et du désaccouplement et évacuant ainsi du fluide sous pression vers l'extérieur pour réduire la pression, dans laquelle la soupape de décharge de pression (18) présente un élément de soupape (30) qui est disposé par rapport à sa direction de fermeture et d'ouverture (34) transversalement à un axe longitudinal d'accouplement (36), dans laquelle la soupape de décharge de pression (18) est axialement mobile avec un corps de base d'accouplement intérieur (20) par rapport à un élément de commande (38) disposé de façon fixe à l'intérieur d'un boîtier d'accouplement (22) extérieur, dans laquelle ce mouvement de commande de corps de base axial est transformé en un mouvement d'ouverture substantiellement radial de l'élément de soupape (30),
**caractérisée en ce que** la soupape de décharge de pression (18) est réalisée comme une soupape à siège étanche métallique avec l'élément de soupape métallique (30) et un siège de soupape métallique (32), l'élément de commande (38) agissant avec une surface de commande (40) radialement par un élément intermédiaire (42) contre l'élément de soupape (30), et l'élément de soupape (30) agissant dans une position de fermeture radialement vers l'intérieur contre le siège de soupape (32) et est mobile radialement vers l'extérieur dans une position d'ouverture.

2. Pièce d'accouplement selon la revendication 1, **caractérisée en ce que** le corps de base d'accouplement (20) intérieur est mobile dans le boîtier d'accouplement (22) extérieur de telle sorte d'une position neutre centrale (figure 12) respectivement contre une force de ressort axialement dans les deux sens par rapport au boîtier d'accouplement (22), notamment lors de l'accouplement dans une position d'accouplement (figure 3, 4) ou lors du désaccouplement dans une position de désaccouplement (figures 5, 6) de telle sorte que ce mouvement de commande axial actionne la soupape de décharge de pression (18) pour l'ouverture.

3. Pièce d'accouplement selon les revendications 1 ou 2, **caractérisée en ce que** l'élément de commande (38) est formé par une goupille axiale, en particulier centrée, présentant en tant que surface de commande (40) sur sa circonférence extérieure un creux (44) de type rainure annulaire avec deux surfaces de flanc (44a, 44b) inclinées de façon opposée, en particulier à conicité plane.

4. Pièce d'accouplement selon l'une quelconque des revendications 1 à 3, **caractérisée en ce que** l'élément de soupape (30) est formé par une bille.

5. Pièce d'accouplement selon l'une quelconque des revendications 1 à 4, **caractérisée en ce que** l'élément intermédiaire (42) est formé par une bille.

6. Pièce d'accouplement selon les revendications 4 et 5, **caractérisée en ce que** la bille formant l'élément intermédiaire (42) d'un diamètre inférieur par rapport à la bille formant l'élément de soupape (30) et avec un jeu suffisant pour un passage de fluide sous pression est disposée dans un canal de soupape (46) contigu au siège de soupape (32) débouchant dans un canal d'évacuation axial (48), l'élément de commande (38) s'étendant dans le canal d'évacuation (48) avec un jeu suffisant pour le passage de fluide sous pression.

7. Pièce d'accouplement selon l'une quelconque des revendications 1 à 6, **caractérisée en ce que** l'élément de soupape (30) est sollicité dans la direction de fermeture avec une force de précontrainte élastique à la manière d'un ressort.

8. Pièce d'accouplement selon la revendication 7, **caractérisée en ce que** l'élément de soupape (30) repose dans un alésage radial d'un élément de support (50), l'élément de support (50) étant entouré au niveau de l'alésage par une bague (52) d'un matériau élastique à la manière du caoutchouc de telle sorte que la bague (52) sollicite l'élément de soupape (30) par la force de précontrainte.

9. Pièce d'accouplement selon l'une quelconque des revendications 1 à 8, **caractérisée en ce que** le dispositif de décharge de pression (16) présente au moins deux soupapes de décharge de pression (18) de même type, coopérant avec le même élément de commande (38).
